Europäisches Patentamt

**European Patent Office**

**Office européen des brevets**

(11) Numéro de publication: **0 109 344**
A 1

(12) # DEMANDE DE BREVET EUROPEEN

(21) Numéro de dépôt: 83450029.0

(51) Int. Cl.³: **F 24 J 3/02**

(22) Date de dépôt: 14.11.83

(30) Priorité: **12.11.82 FR 8219114**

(43) Date de publication de la demande: **23.05.84**
**Bulletin 84/21**

(84) Etats contractants désignés: **AT BE CH DE FR GB IT LI LU NL SE**

(71) Demandeur: **Institut de Recherche alternative SYNOPSIS, Domaine de Belbezet Route d'Olmet, F-34700 Lodeve (FR)**

(72) Inventeur: **Grupp, Mickael, Domaine de Belbezet Rte. d'Olmet, F-34700 Lodeve (FR)**

(74) Mandataire: **Ravina, Bernard, 24, boulevard Riquet, F-31000 Toulouse (FR)**

(54) Capteur d'énergie calorifique à circulation d'un gaz comportant un échangeur au contact du dit gaz.

(57) La présente invention a pour objet un capteur d'énergie calorifique solaire du type comportant un caisson présentant une face ouverte recevant au moins une paroi (5) perméable au rayonnement solaire, une paroi (13) interne au dit caisson constituant absorbeur et un échangeur de chaleur (9) inclus dans le dit caisson et dans lequel circule où se trouve un fluide caloporteur qui est chauffé par l'air ou tout autre gaz soumis au réchauffement solaire dans le dit caisson.

Le capteur selon l'invention se caractérise essentiellement en ce que à l'intérieur du caisson entre la paroi (5) de face perméable au rayonnement solaire et la paroi (13) constituant absorbeur est montée une paroi intermédiaire (14) perméable au rayonnement solaire jointive avec deux des côtés du caisson et dont les bords supérieurs et inférieurs sont éloignés des deux autres côtés du caisson et en ce que l'échangeur (9) est disposé de manière jointive et avec les côtés du caisson, au niveau du passage supérieur de communication des conduits avant et arrière réalisés dans le caisson.

De préférence l'échangeur est positionné de manière jointive soit avec les parois (14) et (6/5) soit entre la paroi arrière (2) soit dans les deux positions à la fois.

CAPTEUR D'ENERGIE CALORIFIQUE SOLAIRE A CIRCULATION D'UN GAZ CALOPOR-
TEUR COMPORTANT UN ECHANGEUR AU CONTACT DU DIT GAZ.

La présente invention a pour objet un capteur d'énergie calorifique solaire à circulation de gaz comportant un échangeur au contact du dit gaz.

Le capteur selon l'invention est du type constitué par un caisson calorifugé présentant une face ouverte recevant au moins une paroi perméable au rayonnement solaire par exemple en verre.
Dans le caisson est disposé de manière connue une paroi ·constituant absorbeur calorifique et un échangeur de chaleur dans lequel circule où se trouve un fluide caloporteur qui est chauffé par contact avec l'air ou tout autre gaz soumis au réchauffement solaire dans le dit caisson.

Le Brevet US n° 4.135.420 décrit un capteur de ce type mais plus comp-liqué.
Il apparaît à l'examen que le rendement de ce capteur ne peut être satisfaisant car le circuit de l'air et le positionnement de l'échang-eur ne sont pas organisés de manière à obtenir un maximum d'efficacité Notamment, le circuit d'air est conçu en sorte que l'air chaud passe le long du vitrage, ce qui entraîne une perte calorifique importante.

En outre, tel qu'est positionné l'échangeur, il n'est pas certain qu'il soit suffisamment en contact du flux d'air en circulation.

La présente invention vise à réaliser un capteur du type tel que mentionné qui obvie aux inconvénients ci-dessus et est de conception plus simple.

A cet effet, le capteur selon l'invention du type constitué par un caisson présentant une face ouverte recevant au moins une paroi perméable au rayonnement solaire, par une paroi interne constituant absorbeur et comportant un échangeur de chaleur se caractérise essentiellement en ce que à l'intérieur du caisson entre la paroi perméable au rayonnement solaire et la paroi constituant absorbeur est montée une paroi intermédiaire perméable au rayonnement solaire jointive avec deux des côtés du caisson et dont les bords supérieur et inférieur sont éloignés des deux autres côtés du caisson pour constituer des passages pour l'air en ce que l'échangeur est disposé de manière jointive avec les côtés du caisson, au niveau du passage supérieur de communication des conduits avant et arrière ainsi réalisés dans le caisson. 1 De ce fait, l'air froid qui a abandonné sa chaleur à l'échangeur descend dans le conduit avant contre le vitrage et se chauffe lors de son mouvement ascentionnel dans le conduit arrière de l'absorbeur.

D'autres avantages et caractéristiques de l'invention apparaîtront à la lecture de la description ci-après de formes de réalisation données à titre d'exemple non limitatif et illustrées par les dessins joints dans lesquels :

- la figure 1 représente une vue extérieure du capteur selon l'invention monté en position inclinée,

- la figure 2 représente une vue extérieure d'un capteur selon l'invention monté en position verticale,

- la figure 3 représente une vue en coupe d'une forme simplifiée de réalisation de l'invention,

- la figure 4 représente une vue en coupe d'une autre forme de réalisation du capteur selon l'invention,

- la figure 5 représente une vue en coupe partielle d'une variante de réalisation du capteur selon l'invention applicable aux formes de réalisation des figures 3 et 4,

- la figure 6 représente une vue partielle d'un perfectionnement du capteur selon l'invention,

- la figure 7 représente une vue partielle d'un autre perfectionnement d'un capteur selon l'invention.

- la figure 8 représente une autre forme de réalisation de l'invention.

- la figure 9 représente une forme de réalisation de l'invention avec stockage calorifique.

- la figure 10 représente une autre forme de réalisation avec stockage calorifique formant dispositif cuiseur solaire.

- la figure 11 représente une autre forme de réalisation de l'invention.

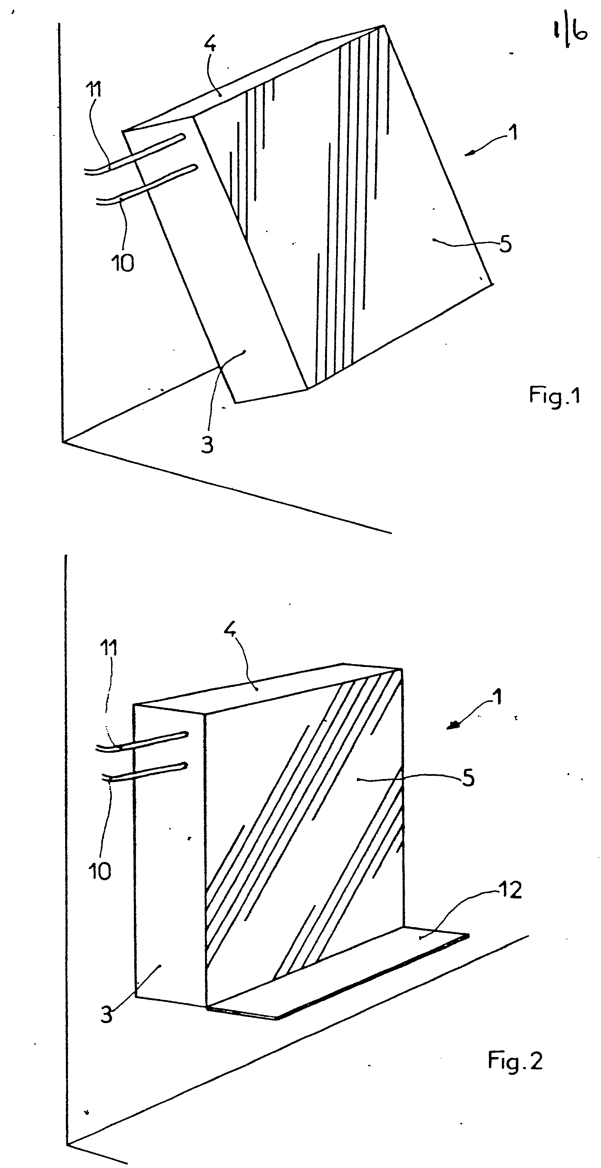

Tel que représenté aux figures 1 et 2, le capteur selon l'invention est constitué par un caisson 1 de préférence de forme parallèlépipèdique rectangle comprenant un fond 2 et quatre côtés, deux longitudinaux 3 et deux transversaux 4.

Le capteur présente une face avant ouverte à l'opposé du fond 2.

Les parois du caisson tel que défini sont isolées de toute manière connue.

Il va de soi que le dit caisson est conçu en un ou des matériaux adaptés en sorte que les faces externes de ses parois résistent aux intempéries et que les faces internes de ses parois résistent dans toutes

0109344

circonstances aux températures maximales qui peuvent y ^etre obtenues

La face ouverte du caisson est formée par une paroi 5 extérieure en ι
matériau perméable au rayonnement solaire qui peut ^etre par exempl
réalisée en verre ou en tout autre matériau adapté.

A l'intérieur du caisson, sur la face avant ouverte et parallèlément
la paroi 5 peut ^etre montée selon une forme de réalisation une deι
xième paroi 6 perméable au rayonnemnt solaire et qui peut ^etre égale
ment réalisée par un vitrage en verre ou en matière synthétique ou ε
tout autre matériau adapté.
Suivant cette forme de réalisation, les parois 5 et 6 sont séparée
par un intervalle 7 ménageant un matelas d'air isolant.

De préférence, le bord du caisson comme représenté aux vues en couɾ
est doté d'un épaulement périphérique de réception des vitrages 5 et
Dans le caisson est monté comme il sera décrit plus avant un échangeι
9 dont sont représentées en figures 1 et 2 les conduites 10 d'alimer
tation en fluide caloporteur, par exemple de l'eau et 11 d'évacuatio
du dit fluide chauffé.

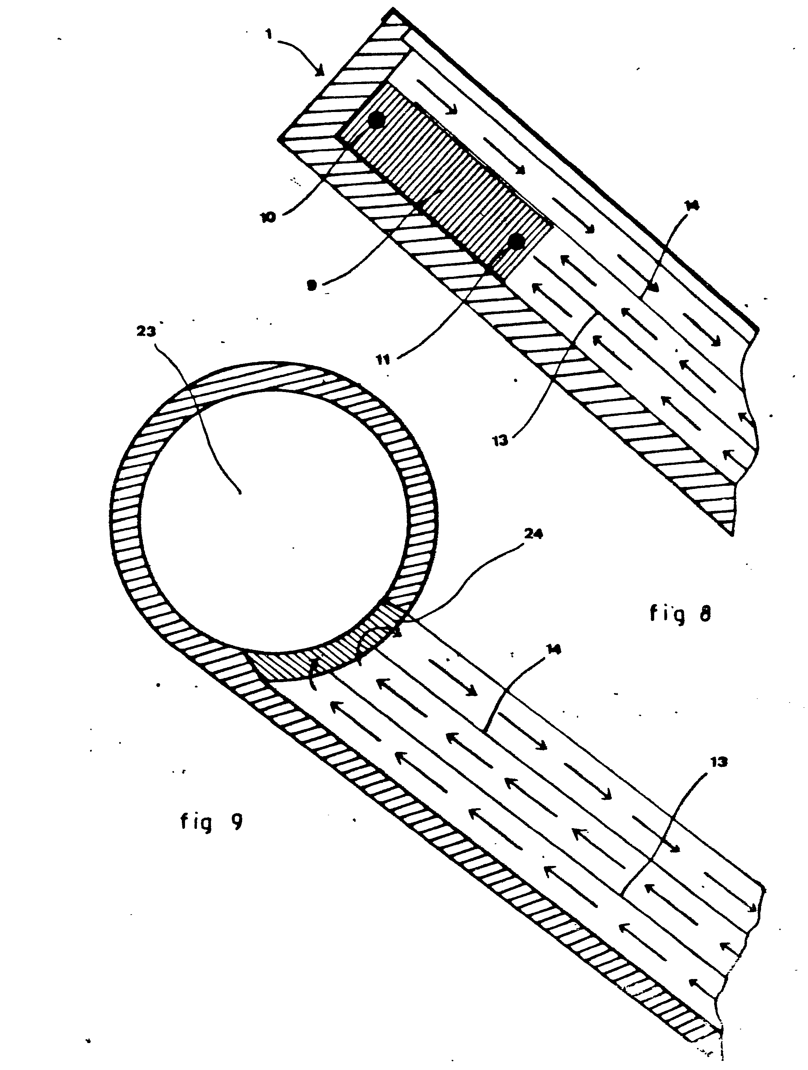

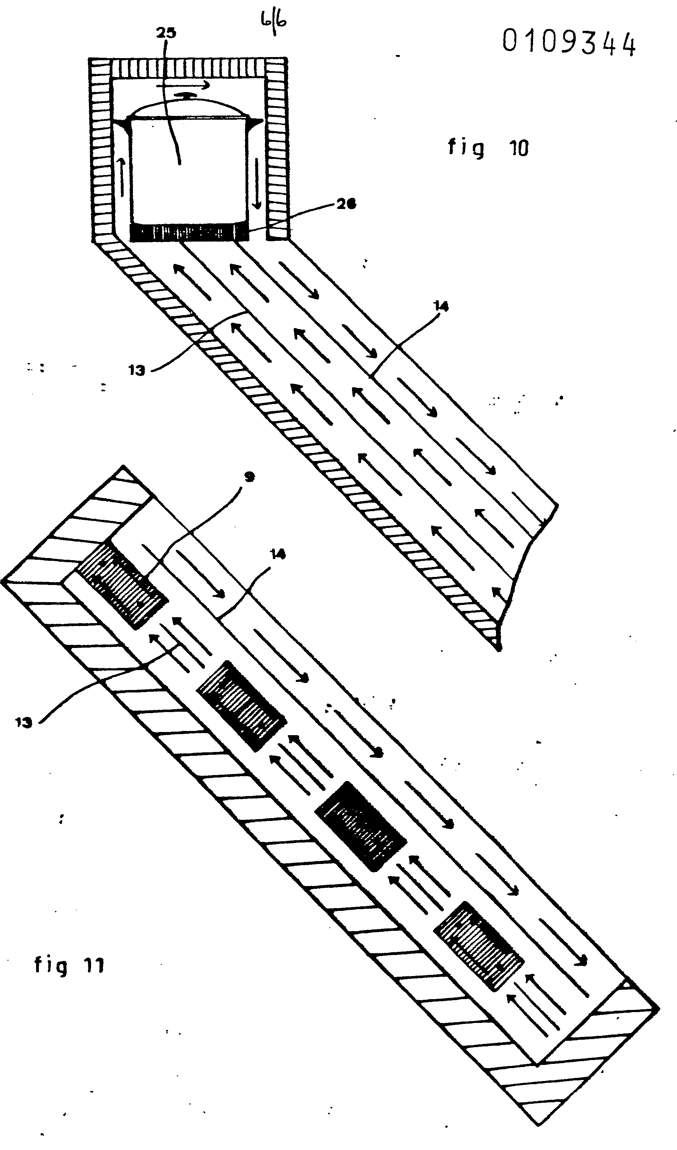

L'échangeur 9 peut etre de tout type connu, par exemple ce peut etr
un serpentin à ailettes dans lequel circule un fluide caloporteur.
L'échangeur peut etre directement lié à un stockage de chaleur inclu
dans le caisson (fig. 9 et 10).

Les conduites 10 et 11 sont en relation avec un réservoir de stockag
non représenté.

En figure 1, la capteur selon l'invention est représenté en positio

d'utilisation inclinée.

En figure 2, le capteur est représenté en position d'utilisation verticale, ce qui peut correspondre à son positionnement cóntre un mur par exemple.

Dans cette forme d'utilisation de la figure 2, le capteur peut ^etre doté d'une paroi déflectrice du rayonnement solaire 12 disposée perpendiculairement à la base de sa paroi 5.

A l'intérieur du caisson 1 constituant le capteur selòn 'l'invention est montée une paroi 13 faisant fonction d'absorbeur et au moins une paroi intermédiaire 14 entre la paroi absorbeur et la paroi 5 ou la paroi 6.

L'absorbeur 13 sera de préférence sélectif, c'est à dire apte à absorber le rayonnement visible et à retenir une grande partie du rayonnement infra-rouge.

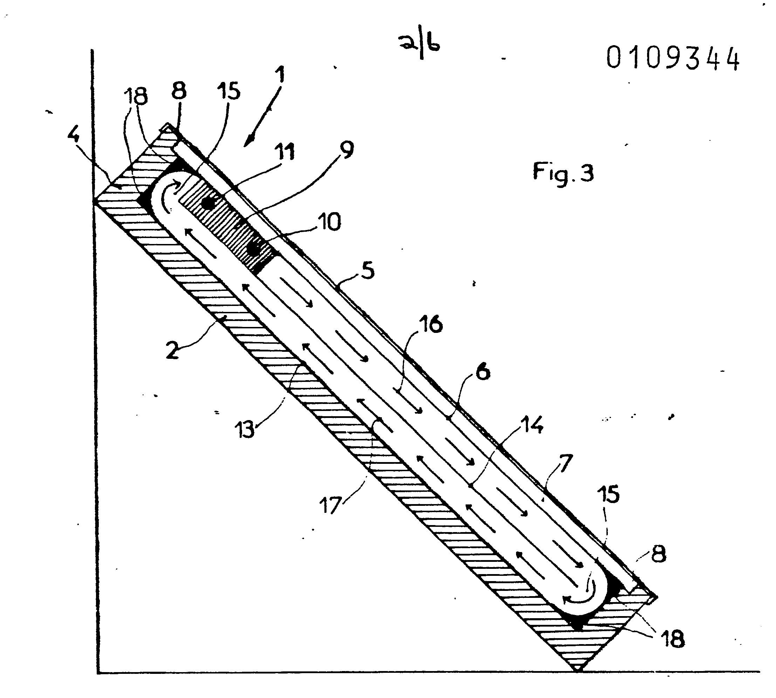

Dans l'exemple de réalisation de l'invention représenté à la figure 3, l'absorbeur 13 est disposé contre la face interne du fond 2 du caisson.

La paroi 14 est une paroi perméable au rayonnement solaire par exemple en verre ou en tout autre matériau plastique ou synthétique adapté.

La paroi 14 peut par exemple ^etre constituée par un film plastique.

La paroi 14 est disposée dans le caisson de manière jointive avec les c^otés 3 de celui-ci en sorte de le diviser en deux compartiments.

Le bord supérieur et le bord inférieur transversaux à l'axe longitudinal du caisson et aux c^otés 3 de la paroi 14 sont éloignés des deux

cˆotés 4 du caisson en sorte de constituer une communication inférieure et supérieure 15 entre les compartiments en définissant dans le dit caisson un conduit 16 et un conduit 17 de circulation de l'air ou de tout autre gaz qui y est contenu.

De préférence, les passages 15 sont de dimension apte à favoriser une circulation suffisante du gaz.

L'échangeur de chaleur 9 est disposé au montage du capteur selon une version de l'invention dans le conduit avant 16 entre la paroi 6 (ou la paroi 5 dans le cas où la paroi 6 serait supprimée) et la paroi intermédiaire 14.

Dans cette version, l'échangeur est monté de manière à occuper l'intégralité de la section du conduit 16 pour constituer un passage obligé du gaz caloporteur.

A cet effet, l'échangeur 9 est monté de manière jointive par ses cˆotés transversaux avec les cˆotés 3 du caisson et de manière jointive avec les parois 14 et 6/ou 5.

L'échangeur 9 est disposé au niveau du passage d'air 15 supérieur.

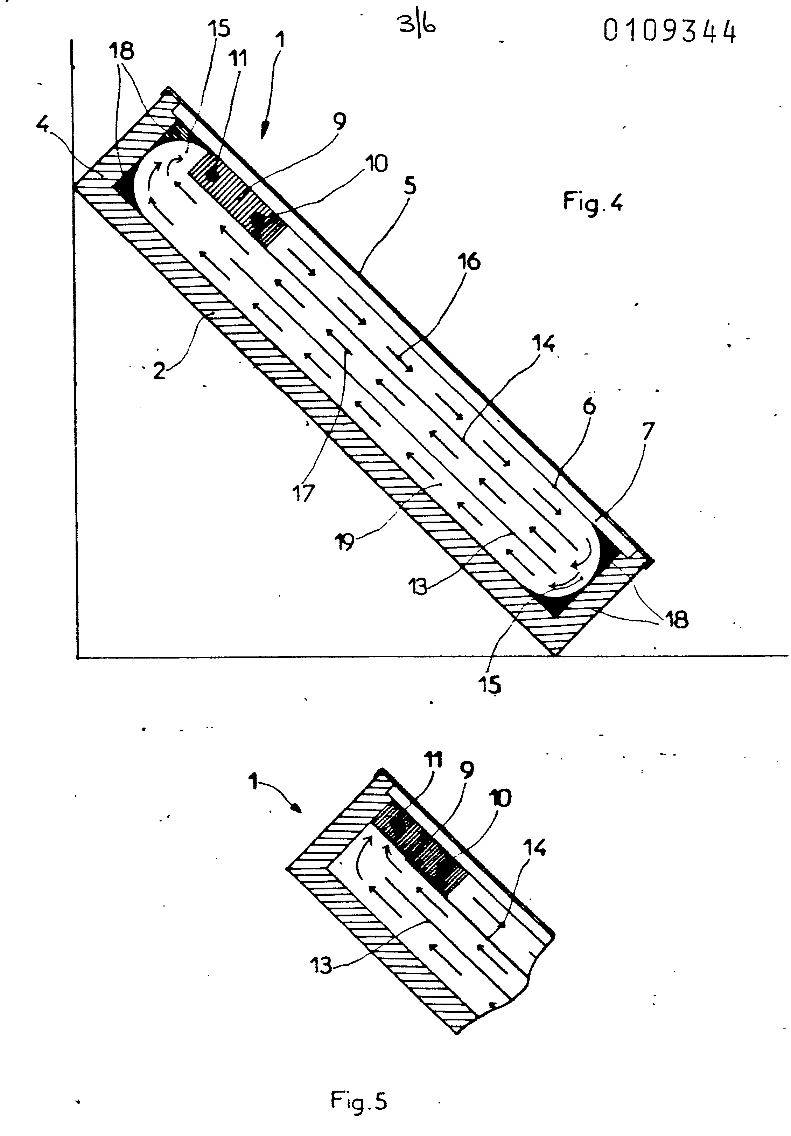

De préférence, comme représenté aux figures 3 et 4, l'échangeur 9 est disposé au niveau supérieur de la paroi 14.

L'échangeur 9 est constitué par exemple par un serpentin muni d'aillettes dans lequel circule un fluide caloporteur, par exemple de l'eau, Il est fixé entre deux parois transversales d'extrémité 3 et les parois 6 (ou 5) et 14 avec lesquelles il est monté jointif.

Il peut etre monté de toute autre manière (voir figures 8, 9, 10, 11).

Selon une autre caractéristique de l'invention l'échangeur occupe une portion réduite de la longueur du conduit 16 mais il est dimensionné de manière à obtenir une convection et un échange de chaleur optimum.

Selon une autre caractéristique de l'invention, l'échangeur selon l'invention peut présenter une entrée ou alimentation en fluide caloporteur 10 à sa base et une sortie 11 en position haute ou inverse-ment.

Les parois internes des cotés 4 du caisson peuvent présenter en regard des passages 15 des parois déflectrices 18 qui facilitent la circula-tion du gaz.

Les parois déflectrices sont de préférence constituées par des corniè-res dont les parois en "L" qui appuient contre les parois 5/6, le bord 4 et le fond 2 sont réunies par une paroi arrondie.

En figure 4 est représenté un capteur selon une autre forme de réalis-tion de l'invention.

Selon cette forme de réalisation, la paroi constituant l'absorbeur 13 n'est pas fixée contre le fond 2 du caisson mais est écartée de celui-ci pour réaliser un conduit 19.

L'absorbeur est fixé de manière jointive aux côtés 3 du caisson et est éloigné des parois internes des côtés 4 en sorte de ménager un passage 15 du gaz en haut et en bas du caisson, les dits passages pouvant être alignés avec ceux ménagés par la paroi 14.

Le capteur pouvant être selon la forme de réalisation de la figure 4 présente par ailleurs toutes les autres dispositions, options ou variantes telles que décrites dans l'exemple de réalisation de la figure 3.

En figure 5 est représentée une variante de réalisation applicable aux formes de réalisation des figures précédentes.

Suivant cette forme de réalisation, les parois déflectrices 18 sont

0109344

supprimées au moins en partie haute du caisson et l'échangeur 9 est disposé de manière jointive entre les parois 6/5 et 14 et les côtés 3 du caisson mais au-dessus du bord supérieur de la paroi 14 et de préférence de manière jointive avec le côté supérieur 4 du caisson en sorte que la pénétration de l'air s'effectue par la partie arrière du dit échangeur et non plus par sa partie supérieure.

Le fonctionnement du capteur tel que décrit dans ses formes de réalisation préférentielle non limitatives est le suivant :

Le gaz caloporteur en l'espèce de l'air par exemple subit comme représenté par les flèches un mouvement descendant dans le conduit avant 16 après libéré une partie de sa chaleur dans l'échangeur 9.

L'air qui passe dans le conduit 16 au contact du vitrage 5/6 est donc un air froid, ce qui évite un transfert thermique excessif vers l'extérieur.

Après ce passage, l'air pénètre dans le conduit 17.

L'absorbeur 13 chauffé par l'action du rayonnement solaire chauffe l'air dans le dit conduit 17 en permettant son ascension.

L'air est également réchauffé par la paroi intermédiaire 14 qui reçoit de la chaleur de l'absorbeur notamment sous forme de rayonnement infrarouge par exemple et la restitue.

L'air chaud au sommet du conduit 17 pénètre dans l'échangeur 9.

De préférence, dans la forme de réalisation telle que représentée, il chauffe en premier lieu, c'est à dire lorsqu'il est le plus chaud, le liquide caloporteur sortant par la conduite supérieure 11 puis au fur et à mesure de sa traversée descendante dans l'échangeur le serpentin de celui-ci jusqu'à la conduite d'entrée 10.

Il va de soi que l'échangeur 9 peut ne pas être monté comme décrit

0109344

précédemment (à contre courant).

L'air froid subit alors un mouvement descendant dans le conduit 16 puis ascendant selon dans le conduit 17 selon le principe du thermo-siphon.

Dans l'exemple de réalisation de l'invention représenté à la figure 4, l'air lors de son mouvement ascendant subit un échauffement plus important que dans l'exemple précédent puisqu'il passe de part et d'autre de l'absorbeur dans les conduits 17 et 19.

Dans cet exemple de réalisation, la fixation jointive latéralement de l'absorbeur et de la paroi 14 et la fixation jointive de l'échangeur avec les parois 5/6 et 14 et les côtés 3 du caisson permettent d'obtenir que la masse d'air en circulation soit au contact de la totalité de l'absorbeur et de la paroi chaude intermédiaire et de la totalité du serpentin de l'échangeur, ce qui permet d'obtenir un excellent rendement.

Le capteur tel que représenté et décrit présente un effet de diode thermique en ce que l'effet de thermosiphon du gaz caloporteur s'interrompt quand le fluide caloporteur dans l'échangeur 9 a une température plus élevée que le gaz caloporteur dans le capteur.

Si, dans le cas d'un stockage extérieur plus chaud que la température du fluide caloporteur dans le capteur, la circulation du fluide caloporteur est mise en marche, la perte d'énergie correspondant au volume de caloporteur froid introduit dans le stockage est très réduite puisque la volume du fluide caloporteur contenu dans l'échangeur 9 est très réduit.

Si la circulation du fluide caloporteur est maintenue dans ce cas,

les pertes thermiques restent faibles par rapport à un capteur solair
de type classique puisque par l'effet de diode thermique décrit plu
haut la partie du capteur non occupée par l'échangeur ne contribue pa
aux pertes thermiques.

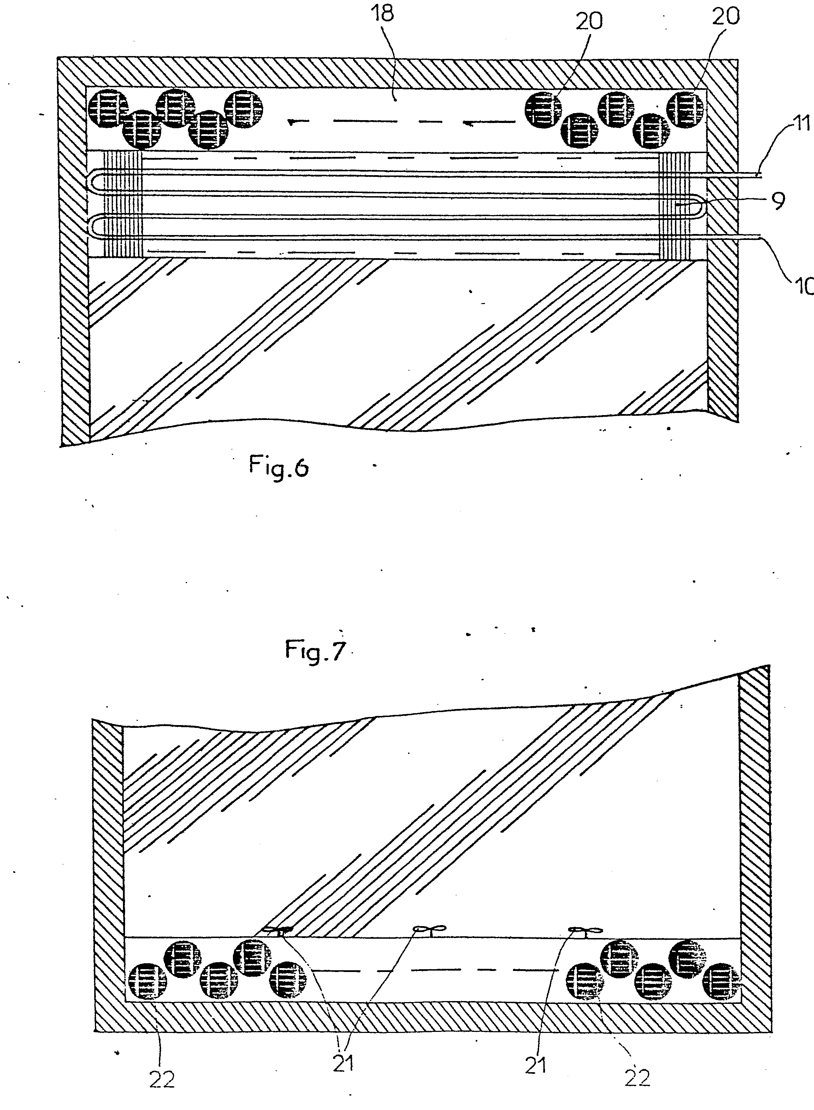

Il est de ce fait possible de procéder, comme illustré en figure 6,
une  régulation thermique de l'installation au moyen de cellules phot
volta"iques 20 montées en façade du capteur sur la surface externe de
parois déflectrices 18.

Cette disposition permet au moyen des dites cellules de commander la
mise en marche d'une pompe non représentée de mise en  circulation di
fluide  caloporteur dans le circuit stockage (ou réseau d'utilisation:
et échangeur, la dite pompe étant alimentée par les dites cellules.

Suivant une autre forme de réalisation de l'invention telle que repré·
sentée en figure 7 à l'intérieur et à la base du caisson du capteur
sont disposés un ou plusieurs ventilateurs 21 créant  une  circulatior
forcée  représentés  schématiquement,  dont les moteurs sont alimentés
par des cellules photo-volta"iques 22 montées sur la  paroi  avant di
capteur,  de préférence sur la face externe de la paroi déflectrice 1ε
inférieure.

Cette disposition est particulièrement avantageuse dans le cas  où  le
capteur selon l'invention ne fonctionne pas ou ne peut pas fonctionner
en thermosiphon par exemple lorsqu'il est placé dans une position très
inclinée par rapport à la verticale.

La position de l'échangeur de chaleur donnée dans les figures 3,4 et 5
est un exemple de réalisation.

D'autres exemples de positionnement de l'échangeur sont possible.

En fig. 8 l'échangeur 9 est monté jointif entre la paroi arrière 2 du caisson et la paroi intermédiaire 14.

L'échangeur peut en fait etre disposé entre la paroi 14 et la paroi 5/6 ou entre la paroi 14 et la paroi 2 ou occuper l'intégralité de la partie supérieure du caisson.

En fig. 9 et 10 sont représentée deux formes de réalisation de l'invention avec stockage de chaleur inclu dans le caisson.

La figure 9 représente à partir de l'invention la réalisation d'un chauffeau solaire dans lequel l'échangeur de chaleur 24 est en contact direct avec un récipient de stockage 23 qui est dans le caisson et en fait partie intégrante.

D'autres arrangements de l'échangeur par rapport au stockage ainsi que le placement du stockage dans la partie vitrée sont possibles dans le cadre de l'invention.

En fig. 10 est représentée une autre forme de réalisation de l'invention dans laquelle le stockage est une enceinte cuisson en l'espèce une marmite 25 disposée dans le caisson en contact direct avec l'échangeur 26 ou servant elle-meme d'échangeur, l'ensemble constituant cuiseur solaire.

La partie du caisson entourant la marmite est calorifugée et est dotée d'une porte d'accès non représentée.

En fig. 11 est représentée une autre forme de réalisation du capteur selon l'invention suivant laquelle plusieurs paires d'absorbeur/échangeur sont disposés dans le conduit 17 entre la paroi arrière 2 du caisson et la paroi 14.

Dans ce cas notamment le changeur peut etre réalisé de toute manièr: connue : échangeur à ailettes, radiateur plat ou tous autres type: d'absorbeurs traversés par un liquide caloporteur.

Le capteur du type tel que décrit permet d'obtenir des résultats trè: satisfaisants.

La présente invention peut recevoir des aménagements et des variante: dans le domaine des équivalents techniques sans pour autant sortir d: cadre du présent brevets.

-13- 0109344

1. Capteur d'énergie calorifique solaire du type comprenant un caisson (1) présentant une face ouverte recevant au moins une paroi (5 et/ou 6) perméable au rayonnement solaire, une paroi (13) intérieure au dit caisson constituant absorbeur et un échangeur de chaleur (9) inclus dans le dit caisson et dans lequel circule un fluide caloporteur qui est chauffé par l'air ou tout autre gaz soumis au réchauffement solaire dans le dit caisson, caractérisé en ce que à l'intérieur du caisson, entre la paroi perméable au réchauffement solaire (5 et/ou 6) et la paroi (13) constituant l'absorbeur est montée au moins une paroi (14) intermédiaire perméable au rayonnement solaire jointive avec deux des côtés (3) du caisson et dont les bords inférieurs et supérieurs sont éloignés des deux autres côtés (4) du caisson en sorte de constituer à l'intérieur du caisson au moins deux conduits 16/17 reliés par des passages de circulation du gaz et en ce que l'échangeur est disposé entre la paroi avant (5 et/ou 6) de la face ouverte du caisson et la paroi intermédiaire (14) de manière jointive avec les dites parois et avec les côtés du caisson et au niveau du passage supérieur de communication des deux conduits ou devant ou derrière ou devant et derrière la paroi intermédiaire (14) au niveau du passage supérieur de l'air (15) entre les conduits (16), (17).

2. Capteur d'énergie calorifique selon la revendication 1 caractérisé en ce que à partir de l'échangeur (9) disposé dans le conduit avant (16) la circulation de l'air qui y a abandonné ses calories s'effectue de manière descendante en se réchauffant et en ce qu'elle s'effectue de manière ascendante dans le ou les conduits arrières (17), (19) où l'air subit un échauffement.

3. Capteur d'énergie calorifique selon les revendications 1 et 2 caractérisé en ce que la paroi absorbeur 13 est disposée entre la paroi intermédiaire (14) perméable au rayonnement solaire et le fonc (2) du caisson et que la dite paroi absorbeur est jointive avec deux des c^otés (3) du caisson et que ses bords sont éloignés des deux aut- res c^otés (4) du caisson.

4. Capteur d'énergie calorifique selon la revendication 1, la revendication 2 et la revendication 3, en option, caractérisé en ce que au niveau des passages supérieurs et inférieurs entre les conduits sont disposées des parois déflectrices (18) aptes à faciliter le pas- sage de l'air d'un conduit à l'autre.

5. Capteur calorifique selon la revendication 1 caractérisé en ce que l'alimentation de l'échangeur calorifique en fluide caloporteur froid s'effectue en partie basse de celui-ci et que l'évacuatior du fluide caloporteur chaud s'effectue en partie haute de celui-ci ou inversement.

6. Capteur calorifique selon la revendication 1 caractérisé en ce que l'échangeur (9) est positionné au niveau de l'extrémité supérieure de la paroi (14).

7. Capteur calorifique selon la revendication 1 caractérisé en ce que l'échangeur (9) est positionné de manière jointive entre la paroi 5/6, la paroi (14), les parois latérales (3) du caisson et sa paroi supérieure (4).

8. Capteur calorifique selon la revendication 1 caractérisé en ce que l'échangeur est position de manière jointive entre la paroi

(14), la paroi (2) du fond du caisson et les parois latérales (3).

9. Capteur calorifique selon la revendication 1 caractérisé en ce que l'échangeur (9) est positionné de manière jointive entre la paroi (5/6), la paroi ( 14) et la paroi arrière (2).

10 . Capteur calorifique selon la revendication 1 caractérisé en ce qu'il comporte une pompe de mise en circulation du fluide caloporteur de l'échangeur (9) et que la dite pompe est alimentée et/ou commandée par des cellules photovolta"iques disposées sur la face avant du capteur.

11. Capteur calorifique selon la revendication 1 caractérisé en ce que à l'intérieur du caisson et à sa base et ou sont montés un ou plusieurs ventilateurs (21) alimentés en énergie par des cellules photovolta"iques disposées sur la face avant du capteur.

12. Capteur selon la revendication 1 caractérisé en ce que la circulation par thermosiphon du gaz caloporteur dans le caisson s'interrompt si le fluide caloporteur dans l'échangeur (9) a une température plus élevée que celle du gaz caloporteur dans le capteur.

13. Capteur selon la R1 caractérisé en ce que une seule paroi intermédiaire (14) est chauffée par l'absorbeur (13) et restitue la chaleur au gaz en circulation.

14. Capteur calorifique selon la revendication 1 caractérisé en ce que plusieurs paires absorbeur/échangeur (9) sont disposés entre la paroi (2) et la paroi (14).

15. Capteur calorifique selon la revendication 1 caractérisé en ce que l'échangeur (24/26) est monté en contact direct avec un stockage calorifique (23/25) contenu dans le caisson.

Fig.1

Fig.2

Fig. 3

2/6

0109344

3/6                    0109344

Fig.4

Fig.5

Fig.6

Fig.7

fig 8

fig 9

0109344

fig 10

fig 11

**Office européen
des brevets**

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-A-2 900 875 (SERAPIONI) <br> * Figure 5 * | 1,2 | F 24 J 3/02 |
| A | US-A-4 086 909 (LYON) <br> * Colonne 3, lignes 46-59 * | 3,13 | |
| A | EP-A-0 018 543 (LAING) <br> * Figure 11 * | 4 | |
| A | US-A-4 312 328 (LEYMAN) <br><br> * En entier * | 5,6,7, 8,12 | |
| A,D | US-A-4 135 490 (SOLEAU) <br> * Figure 7 * | 9,14 | |
| A | FR-A-2 486 983 (DAUGAS) <br> * Page 8, lignes 17-24; figure 35 * | 10 | F 24 J |
| A | FR-A-2 497 929 (OLIVIER) <br> * Page 4, lignes 4-41 * | 11 | |
| A | US-A-4 284 066 (BROW) <br> * En entier * | 15 | |
| A | GB-A-2 089 967 (MATSUSHITA) <br> * En entier * | 15 | |
| | --- -/- | | |

DOMAINES TECHNIQUES
RECHERCHES (Int. Cl. ³)

Le présent rapport de recherche a été établi pour toutes les revendications

| Lieu de la recherche <br> LA HAYE | Date d'achèvement de la recherche <br> 09-02-1984 | Examinateur <br> SMETS E.D.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503.03.82

**Office européen des brevets**

# RAPPORT DE RECHERCHE EUROPEENNE

| | DOCUMENTS CONSIDERES COMME PERTINENTS | | Page 2 | |
|---|---|---|---|---|
| Catégorie | Citation du document avec indication, en cas de besoin, des parties pertinentes | Revendication concernée | CLASSEMENT DE LA DEMANDE (Int. Cl. ³) | |
| A | US-A-4 273 100 (COGLIANO) | | | |
| A | CH-A- 257 348 (SUTTER) | | | |
| | | | DOMAINES TECHNIQUES RECHERCHES (Int. Cl. ³) | |

Le présent rapport de recherche a été établi pour toutes les revendications

| Lieu de la recherche | Date d'achèvement de la recherche | Examinateur |
|---|---|---|
| LA HAYE | 09-02-1984 | SMETS E.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82